# EUROPEAN PATENT APPLICATION

(11) **EP 4 585 455 A1**
(43) Date of publication of application: **16.07.2025**
(21) Application number: 24218626.0
(22) Date of filing: 10.12.2024
(51) Int. Cl.: B60L 58/10, B60L 53/80

(54) **VEHICLE, DISPLAY SYSTEM, AND METHOD FOR SWAPPING ENERGY STORAGE DEVICE**

(30) Priority: 09.01.2024 JP 2024001384
(71) Applicant: TOYOTA JIDOSHA KABUSHIKI KAISHA, Aichi-ken, 471-8571 (JP)
(72) Inventor: ICHIKAWA, Shinji, Toyota-shi, 471-8571 (JP)
(74) Representative: TBK

(57) **Abstract**

A vehicle (100) includes a vehicle body (10) in and from which a first energy storage device (B2) is installable and removable. The vehicle body (10) includes a first control device (28a). The first control device (28a) is configured to, when the first energy storage device (B2) is installed in the vehicle body (10), notify a user of at least one of the following: states of the first energy storage device (B2) installed in the vehicle body (10); characteristics of the first energy storage device (B2) installed in the vehicle body (10); states of the vehicle (100) after installation of the first energy storage device (B2) in the vehicle body (10); and performances of the vehicle (100) after the installation of the first energy storage device (B2) in the vehicle body (10).

## Description

### BACKGROUND OF THE INVENTION

### 1. Field of the Invention

The present disclosure relates to vehicles, display systems, and methods for swapping an energy storage device.

### 2. Description of Related Art

Japanese Unexamined Patent Application Publication No. 2023-101504 (JP 2023-101504 A) discloses a vehicle including a vehicle body in and from which an energy storage device can be installed and removed.

### SUMMARY OF THE INVENTION

For example, the energy storage device installed in the vehicle described in JP 2023-101504 A is swappable. However, an energy storage device newly installed in the vehicle body may have characteristics different from those of an original energy storage device initially installed in the vehicle. The performances of the vehicle after the installation of the new energy storage device in the vehicle body may be different from the original performances of the vehicle. The states of the energy storage device in the vehicle before the swap may also be significantly different from the states of the energy storage device in the vehicle after the swap. The states of the vehicle may significantly change due to swapping the energy storage device. Therefore, when an energy storage device installed in a vehicle is swapped out for another energy storage device, it may make the user of the vehicle feel something is wrong or may confuse the user of the vehicle.

The present disclosure reduces the possibility that a user may feel something is wrong or get confused about the states or performances of a vehicle (or an energy storage device installed in the vehicle) after the energy storage device is installed in a vehicle body of the vehicle.

A vehicle according to a first aspect of the present disclosure includes a vehicle body in and from which a first energy storage device is installable and removable. The vehicle body includes a first control device. The first control device is configured to, when the first energy storage device is installed in the vehicle body, notify a user of at least one of the following: a state of the first energy storage device installed in the vehicle body; a characteristic of the first energy storage device installed in the vehicle body; a state of the vehicle after installation of the first energy storage device in the vehicle body; and a performance of the vehicle after the installation of the first energy storage device in the vehicle body.

With the above configuration, when the first energy storage device is installed in the vehicle body, the control device included in the vehicle body notifies the user of first information indicating the state and/or characteristic of the first energy storage device installed in the vehicle body, second information indicating the state and/or performance of the vehicle after the installation of the first energy storage device in the vehicle body, or both the first information and the second information. This can reduce the possibility that the user may feel something is wrong or get confused about the state or performance of the vehicle (or the first energy storage device installed in the vehicle) after the first energy storage device is installed in the vehicle body.

The first control device may include a memory device that stores first specification information indicating a characteristic of an original second energy storage device initially installed in the vehicle. The first control device may be configured to, when the first energy storage device is installed in the vehicle body, notify the user of the characteristic of the first energy storage device installed in the vehicle body in a manner that allows comparison with the characteristic of the original second energy storage device that is indicated by the first specification information.

The above configuration allows the user to check the characteristic of the first energy storage device installed in the vehicle body in comparison with the characteristic of the original second energy storage device. This makes it easier for the user to recognize the difference in characteristic between the original energy storage device and the current energy storage device. When the energy storage device in the vehicle has a characteristic that falls below the specifications of the energy storage device when the vehicle was new (original energy storage device) due to swapping of the energy storage device, the user can recognize that this is due to the swapping of the energy storage device. This can reduce the possibility that the user may feel something is wrong or get confused about the characteristic of the energy storage device installed in the vehicle. For example, the first specification information may be stored in the memory device at the time of shipment of the vehicle.

The characteristic of the first energy storage device that is notified may include at least one of the following of the first energy storage device: maximum output power; maximum regenerative power; and a capacity, and the characteristic of the second energy storage device that is notified may include at least one of the following of the second energy storage device: maximum output power; maximum regenerative power; and a capacity.

The above configuration makes it easier for the user to recognize the characteristic of the energy storage device that is particularly likely to affect the performance of the vehicle.

The first control device may include a memory device that stores second specification information indicating an original performance of the vehicle. The first control device may be configured to, when the first energy storage device is installed in the vehicle body, notify the user of the performance of the vehicle after the installation of the first energy storage device in the vehicle body in a manner that allows comparison with the original performance indicated by the second specification information.

The above configuration allows the user to check the performance of the vehicle after the installation of the first energy storage device in the vehicle body in comparison with the original performance of the vehicle. This makes it easier for the user to recognize the difference in a performance of the vehicle between the original state and the current state. When the vehicle has a performance that falls below the specifications of the vehicle when the vehicle was new due to swapping of the energy storage device, the user can recognize that this is due to the swapping of the energy storage device. This can reduce the possibility that the user may feel something is wrong or get confused about the performance of the vehicle. For example, the second specification information may be stored in the memory device at the time of shipment of the vehicle.

The performance of the vehicle that is notified may include at least one of the following: an output performance of the vehicle based on electric power of the first energy storage device; a regenerative charging performance of the first energy storage device in the vehicle; and a maximum cruising range of the vehicle based on the electric power of the first energy storage device.

The above configuration makes it easier for the user to recognize, after swapping of the energy storage device, the performance of the vehicle that is likely to be affected by swapping of the energy storage device.

The first control device may include a memory device that stores second specification information indicating an original performance of the vehicle. When the first energy storage device is installed in the vehicle body, the first control device may determine whether the performance of the vehicle after the installation of the first energy storage device in the vehicle body falls below the original performance indicated by the second specification information. When determination is made that the performance of the vehicle falls below the original performance, the first control device may notify the user of the performance of the vehicle after the installation of the first energy storage device in the vehicle body. When determination is made that the performance of the vehicle does not fall below the original performance, the first control device may not notify the user of the performance of the vehicle after the installation of the first energy storage device in the vehicle body.

It is not preferable from the standpoint of quality assurance of the vehicle etc. that the vehicle become unable to meet its original performance (specifications) indicated by the second specification information due to swapping of the energy storage device. In this regard, with the above configuration, when the vehicle becomes unable to meet the performance indicated by the second specification information due to swapping of the energy storage device, the user is notified of the decreased performance of the vehicle. This reduces the possibility that the user may misunderstand the performance of the vehicle. The user therefore can continue to use the vehicle knowing that the performance of the vehicle has decreased.

The first energy storage device may be a battery pack including a second control device. The vehicle body may further include a power supply. The second control device may be configured to, when the first energy storage device is installed in the vehicle body, be started with electric power supplied from the power supply, and may be configured to, when the second control device is started, send information on the first energy storage device installed in the vehicle body to the first control device.

In the above vehicle, even when a battery pack, not including a power supply for starting the second control device, is installed in the vehicle body, the vehicle body (first control device) can acquire the information on the first energy storage device from the first energy storage device (second control device) by supplying electric power from the power supply provided in the vehicle body to the second control device. The power supply provided in the vehicle body may be a low-voltage power supply that outputs electric power at a voltage lower than the voltage of a battery included in the first energy storage device. The low-voltage power supply may be configured to supply electric power to the first control device. The low-voltage power supply may be an auxiliary battery.

The information that is sent may include a characteristic of the first energy storage device installed in the vehicle body. The first control device may be configured to calculate the performance of the vehicle after the installation of the first energy storage device in the vehicle body by using the information received from the second control device.

The above configuration allows the first control device to appropriately obtain the performance of the vehicle after the installation of the first energy storage device in the vehicle body by using the information received from the second control device (including the characteristic of the first energy storage device).

The vehicle may further include a display device. The first control device may be configured to, when the first energy storage device is installed in the vehicle body, notify the display device of at least one of the following: the state of the first energy storage device installed in the vehicle body; the characteristic of the first energy storage device installed in the vehicle body; the state of the vehicle after the installation of the first energy storage device in the vehicle body; and the performance of the vehicle after the installation of the first energy storage device in the vehicle body. The display device may display, to the user, information notified from the first control device.

With the above configuration, the state or performance of the vehicle (or the first energy storage device installed in the vehicle) is appropriately notified to a user terminal (display device mounted on the vehicle) and displayed to the user. Visualization facilitates the user's recognition.

A display system according to a second aspect of the present disclosure includes the vehicle according to any one of the above configurations; and a mobile terminal that is carriable by the user. The first control device is configured to, when the first energy storage device is installed in the vehicle body, notify the mobile terminal of at least one of the following: the state of the first energy storage device installed in the vehicle body; the characteristic of the first energy storage device installed in the vehicle body; the state of the vehicle after the installation of the first energy storage device in the vehicle body; and the performance of the vehicle after the installation of the first energy storage device in the vehicle body. The mobile terminal displays, to the user, information notified from the first control device.

With the above display system, the state or performance of the vehicle (or the first energy storage device installed in the vehicle) is appropriately notified to the user terminal (mobile terminal) and displayed to the user. Visualization facilitates the user's recognition.

A third aspect of the present disclosure relates to a method for swapping an energy storage device. The method includes: removing a second energy storage device from a vehicle including a vehicle body and the second energy storage device, the vehicle body including a first control device; installing a first energy storage device including a second control device in the vehicle body in place of the second energy storage device; acquiring, by the first control device, information on the first energy storage device from the second control device with the first energy storage device installed in the vehicle body; and notifying, by the first control device, a user of at least one of the following by using the information acquired from the second control device: a state of the first energy storage device installed in the vehicle body; a characteristic of the first energy storage device installed in the vehicle body; a state of the vehicle after installation of the first energy storage device in the vehicle body; and a performance of the vehicle after the installation of the first energy storage device in the vehicle body.

Like the vehicle described above, this method can also reduce the possibility that the user may feel something is wrong or get confused about the state or performance of the vehicle (or the energy storage device installed in the vehicle) after the energy storage device is installed in the vehicle body.

The notifying the user may include: calculating, by the first control device, the performance of the vehicle after the installation of the first energy storage device in the vehicle body by using the information acquired from the second control device; and notifying the user of the calculated performance of the vehicle by the first control device.

In the above method, the first control device appropriately calculates the performance of the vehicle after the installation of the energy storage device in the vehicle body. The user can recognize the performance of the vehicle after the installation of the energy storage device in the vehicle body.

The present disclosure can reduce the possibility that the user may feel something is wrong or get confused about the state or performance of the vehicle (or the energy storage device installed in the vehicle) after the energy storage device is installed in the vehicle body.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a configuration of a vehicle according to an embodiment of the present disclosure;
FIG. 2 shows an example of a configuration of a battery swap system;
FIG. 3 is a flowchart of a method for swapping an energy storage device according to the embodiment;
FIG. 4 shows an example of a swap device included in the battery swap system;
FIG. 5 illustrates how a vehicle body and an energy storage device are connected according to the embodiment;
FIG. 6 is a flowchart of a process that is performed by a control device in the vehicle body after an energy storage device is installed in the vehicle body in the method shown in FIG. 3;
FIG. 7 shows a modification of a screen displaying vehicle performances shown in FIG. 6;
FIG. 8 is a flowchart of a modification of the method shown in FIG. 3;
FIG. 9 is a flowchart of a first modification of the method shown in FIG. 6;
FIG. 10 is a flowchart of a second modification of the method shown in FIG. 6;
FIG. 11 is a flowchart of a third modification of the method shown in FIG. 6;
FIG. 12 is a flowchart of a fourth modification of the method shown in FIG. 6; and
FIG. 13 shows a modification of a display form shown in FIG. 12.

### DETAILED DESCRIPTION OF EMBODIMENTS

An embodiment of the present disclosure will be described in detail with reference to the drawings. The same or corresponding parts are denoted by the same signs throughout the drawings, and description thereof will not be repeated.

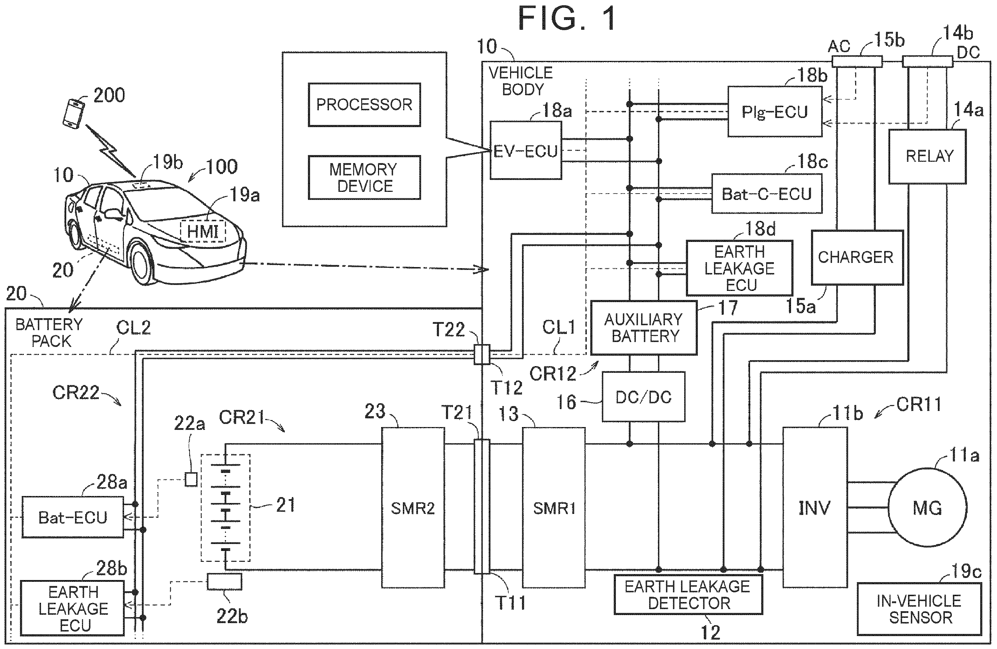

FIG. 1 shows a configuration of a vehicle according to the embodiment. Referring to FIG. 1, a vehicle 100 includes a vehicle body 10 and a battery pack 20. The vehicle body 10 is part of the vehicle 100 other than the battery pack 20. The vehicle 100 is configured to run on the electric power stored in the battery pack 20. The battery pack 20 is an example of the "energy storage device" according to the present disclosure. The vehicle 100 is, for example, a battery electric vehicle (BEV) not equipped with an internal combustion engine. However, the vehicle 100 is not limited to this, and may be a plug-in hybrid electric vehicle (PHEV) equipped with an internal combustion engine, or may be any other type of electrified vehicle (xEV).

The vehicle body 10 includes circuits CR11, CR12. The battery pack 20 includes circuits CR21, CR22. The circuit CR12 includes an auxiliary battery 17. The circuit CR21 includes a battery 21. The auxiliary battery 17 is a low-voltage power supply that outputs electric power with a voltage lower than the voltage of the battery 21. The circuit CR21 applies a voltage (high voltage) from the battery 21 to the circuit CR11. The circuit CR11 receives the voltage (high voltage) from the battery 21. The circuit CR12 applies a voltage (low voltage) from the auxiliary battery 17 to the circuit CR22. The circuit CR22 receives the voltage (low voltage) from the auxiliary battery 17. A direct current-to-direct current (DC-to-DC) converter 16 is provided between the circuits CR11, CR12.

The circuit CR11 in the vehicle body 10 includes a motor generator (MG) 11a, an inverter 11b, a DC charging relay 14a, a DC inlet 14b, an alternating current (AC) charger 15a, and an AC inlet 15b. The circuit CR11 is provided with an earth leakage detector 12. The circuit CR21 in the battery pack 20 is provided with a battery management system (BMS) 22a and an earth leakage detector 22b. The vehicle body 10 further includes a terminal T11 to and from which the battery pack 20 can be connected and disconnected, and an SMR 13 (first relay) disposed between the terminal T11 and the circuit CR11. The circuit CR11 (high-voltage power supply line) is connected to the terminal T11 via the SMR 13. The battery pack 20 further includes a terminal T21 to and from which the vehicle body 10 can be connected and disconnected, and an SMR 23 (second relay) disposed between the terminal T21 and the circuit CR21. The circuit CR21 (high-voltage power supply line) is connected to the terminal T21 via the SMR 23. The term "SMR" stands for "system main relay."

The battery 21 is a secondary battery such as a lithium-ion battery, a nickel metal hydride battery, or a sodium-ion battery. The type of the secondary battery may be a liquid secondary battery or an all-solid-state secondary battery. A plurality of secondary batteries may form an assembled battery.

The vehicle body 10 further includes a terminal T12. The circuit CR12 (low-voltage power supply line) in the vehicle body 10 is connected to the terminal T12. A communication line CL1 (dashed line in FIG. 1) in the vehicle body 10 is also connected to the terminal T12. The battery pack 20 further includes a terminal T22. The circuit CR22 (low-voltage power supply line) in the battery pack 20 is connected to the terminal T22. A communication line CL2 (dashed line in FIG. 1) in the battery pack 20 is also connected to the terminal T22.

The auxiliary battery 17 is an in-vehicle battery that supplies electric power to drive accessories installed in the vehicle 100. The auxiliary battery 17 outputs DC power to the circuit CR12 (low-voltage power supply line). The circuit CR12 further includes ECUs 18a, 18b, 18c, and 18d in addition to the auxiliary battery 17. The circuit CR22 further includes ECUs 28a, 28b. The auxiliary battery 17 supplies electric power to, for example, the ECUs 18a to 18d and 28a, 28b connected to the low-voltage power supply line. The term "ECU" stands for "electronic control unit."

The ECU 18a can be regarded as a control device (EV-ECU) that manages various types of control related to the vehicle 100. The ECU 18b can be regarded as a control device (Plg-ECU) that detects the states of the DC inlet 14b and the AC inlet 15b. The ECU 18c can be regarded as a control device (Bat-C-ECU) that controls the DC charging relay 14a and the AC charger 15a. The ECU 18d can be regarded as a control device (first earth leakage ECU) that monitors an earth leakage state of the circuit CR11. The ECU 28a can be regarded as a control device (Bat-ECU) that monitors the states of the battery 21 and controls the SMR 23. The ECU 28b can be regarded as a control device (second earth leakage ECU) that monitors an earth leakage state of the circuit CR21.

Each ECU includes a processor and a memory device. The memory device is configured to save stored information. The memory device stores programs and various types of information to be used by the programs. In the present embodiment, various types of control are performed by the processor executing the programs stored in the memory device. These processes may be performed by hardware (electronic circuitry) alone without using software.

In the vehicle 100, the ECUs are connected so that they can communicate with each other via an in-vehicle network. The in-vehicle network is, for example, a controller area network (CAN). The ECU 18a acquires information from other ECUs, controls the inverter 11b, the DC-to-DC converter 16, and the SMR 13, and sends control commands to the ECU 18c and the ECU 28a.

The earth leakage detector 12 detects an earth leakage state (e.g., insulation resistance) related to the circuit CR11, and outputs the detected earth leakage state to the ECU 18d. The BMS 22a detects the states (current, voltage, temperature, etc.) of the battery 21, and outputs the detection results to the ECU 28a. The earth leakage detector 22b detects an earth leakage state (e.g., insulation resistance) related to the circuit CR21, and outputs the detected earth leakage state to the ECU 28b. When the circuits CR11, CR21 are connected, the earth leakage detector 12 or 22b detects an earth leakage state of a circuit formed by the circuits CR11, CR21. When the battery pack 20 is removed from the vehicle body 10, the earth leakage detector 12 detects the earth leakage state of the circuit CR11, and the earth leakage detector 22b detects the earth leakage state of the circuit CR21. The ECU 18a acquires information indicating the battery states and the earth leakage states from the ECUs 18d, 28a, and 28b.

The DC-to-DC converter 16 transforms DC power between the circuits CR11, CR12. Specifically, the DC-to-DC converter 16 steps down the DC power from the battery 21 and outputs the stepped-down power to the auxiliary battery 17. The ECU 18a may control the DC-to-DC converter 16 so that electric power is supplied from the battery 21 (main battery) to the auxiliary battery 17 when the remaining charge of the auxiliary battery 17 decreases. The capacity of the battery 21 is larger than the capacity of the auxiliary battery 17. Each of the SMRs 13, 23 connects and disconnects an electrical path between the circuits CR11, CR21. When the voltage of the battery 21 is applied to the circuit CR11, the ECU 18a closes (connects) both of the SMRs 13, 23. When the voltage of the battery 21 is not applied to the circuit CR11, the ECU 18a opens (disconnects) either or both of the SMRs 13, 23.

The terminals T21, T22 of the battery pack 20 are configured to be connected to and disconnected from the terminals T11, T12 of the vehicle body 10, respectively. By connecting the terminals T21, T22 to the terminals T11, T12, the battery pack 20 is installed in the vehicle body 10 and the vehicle 100 is completed. In the vehicle 100, the circuit CR11 in the vehicle body 10 is connected to the circuit CR21 in the battery pack 20 via the SMRs 13, 23. The circuit CR12 in the vehicle body 10 is connected to the circuit CR22 in the battery pack 20. The communication lines CL1, CL2 are also connected to each other. These communication lines constitute the in-vehicle network (e.g., CAN) of the vehicle 100.

The MG 11a functions as a traction motor. The inverter 11b functions as a power control unit (PCU) for the MG 11a. The inverter 11b drives the MG 11a with electric power supplied from the battery 21. The MG 11a converts the electric power to torque to rotate drive wheels of the vehicle 100. The MG 11a generate regenerative power during, for example, deceleration of the vehicle 100 to charge the battery 21.

Each of the DC inlet 14b and the AC inlet 15b includes a terminal that detects connection and disconnection of a charging cable (charging plug), and outputs, to the ECU 18b, a signal indicating whether the charging cable is connected. The ECU 18a acquires information indicating an inlet state from the ECU 18b, and sends a control command to the ECU 18c. In the vehicle 100, the ECUs 18a to 18c cooperate to perform charging control. The DC inlet 14b receives DC power from outside the vehicle. When charging the battery 21 with the DC power input to the DC inlet 14b, the ECU 18a closes the SMRs 13, 23 and the ECU 18c closes the DC charging relay 14a. The AC inlet 15b receives AC power from outside the vehicle. The AC charger 15a performs AC to DC conversion. The ECU 18c controls the AC charger 15a while both of the SMRs 13, 23 are closed and AC power is input from outside the vehicle to the AC charger 15a via the AC inlet 15b. The AC charger 15a converts the AC power to DC power according to a control command from the ECU 18c, and outputs the DC power to the battery 21.

The vehicle body 10 further includes a human-machine interface (HMI) 19a and a communication device 19b. The HMI 19a and the communication device 19b also receive electric power supplied from the auxiliary battery 17.

The HMI 19a includes an input device and a display device that are installed in the vehicle body 10. The HMI 19a may include a touch panel display. The input device may include an operation portion (e.g., buttons) installed on a steering wheel. The input device may include a smart speaker that receives voice inputs. The input device outputs to the ECU 18a a signal according to an input from a user. The display device may include an instrument panel or a head-up display. The display device may change the display direction (screen orientation) according to an instruction from the ECU 18a. The display device may perform display based on extended reality (XR) technology (technology that combines real physical space with virtual space) such as virtual reality (VR) or augmented reality (AR).

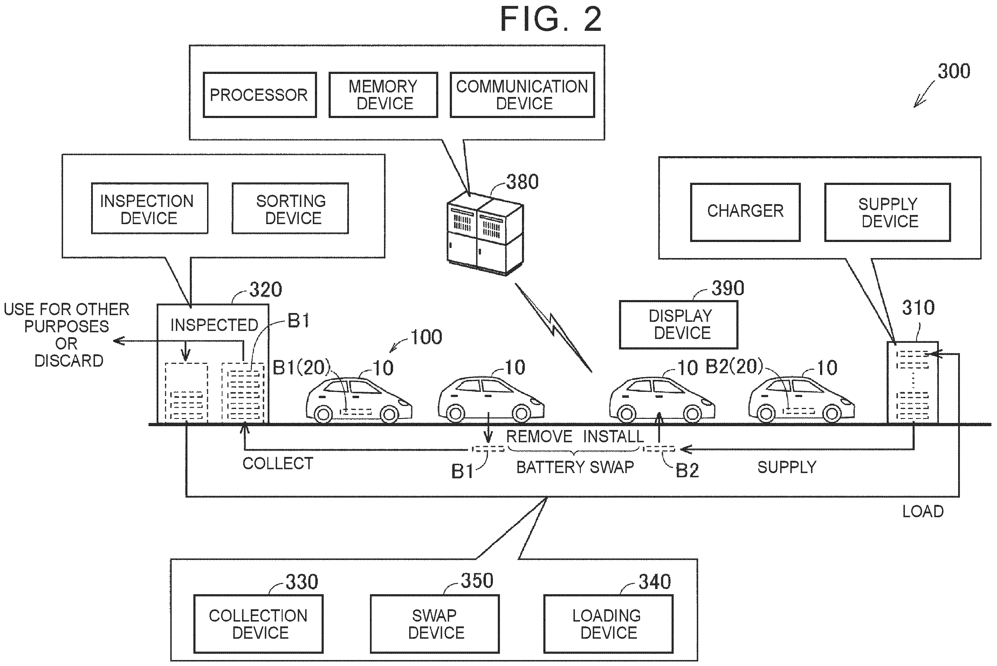

The communication device 19b is configured to wirelessly communicate with a mobile terminal 200 and a server 380 (FIG. 2) described later. The ECU 18a wirelessly communicates with the mobile terminal 200 via the communication device 19b. The mobile terminal 200 is a mobile terminal that can be carried by the user. The mobile terminal 200 is, for example, a smartphone equipped with a touch panel display. However, the mobile terminal 200 is not limited to this, and may be a laptop, a handheld gaming console, a wearable device, an electronic key, etc.

The vehicle body 10 is also equipped with various sensors, not shown (in-vehicle sensor 19c). The in-vehicle sensors 19c may include a sensor that detects the states (current, voltage, temperature, etc.) of the auxiliary battery 17, a sensor that detects charging power (charging voltage and charging current), and a sensor that detects input power and output power of the inverter 11b. The ECU 18a is configured to acquire the detection results from these sensors directly or via other ECUs.

In the present embodiment, the HMI 19a includes a start switch. The start switch is commonly called "power switch" or "ignition switch." The start switch receives a start operation, a stop operation, a Ready-ON operation, and a Ready-OFF operation. The start operation and the stop operation are operations requesting to start and stop a control system (including each ECU) of the vehicle 100, respectively. The Ready-ON operation and the Ready-OFF operation are operations requesting to bring the vehicle 100 into a Ready-ON state and a Ready-OFF state, respectively. One user operation may correspond to a plurality of requests. For example, the start operation and the Ready-ON operation may be the same operation. The stop operation and the Ready-OFF operation may be the same operation. Each operation may be a remote operation (e.g., a request by wireless communication).

The Ready-ON state is a state in which the voltage of the battery 21 is applied to the circuit CR11. In the Ready-ON state, both of the SMRs 13, 23 are closed and electric power is supplied from the battery 21 to a vehicle drive device. The vehicle drive device includes the MG 11a and the inverter 11b. The Ready-OFF state is a state in which the voltage of the battery 21 is not applied to the circuit CR11. In the Ready-OFF state, either or both of the SMRs 13, 23 are closed and electric power is not supplied from the battery 21 to the vehicle drive device.

The battery pack (battery pack 20) installed in the vehicle 100 is swappable for another battery pack. FIG. 2 shows an example of a configuration of a battery swap system that performs battery pack swap; A battery swap system 300 shown in FIG. 2 is installed at, for example, a battery swap station.

Referring to FIG. 2, the battery swap system 300 is configured to remove a battery pack installed in the vehicle 100 from the vehicle body 10 and install another battery pack in the vehicle body 10. Hereinafter, the battery pack (first energy storage device) that is collected from the vehicle 100 will be referred to as "battery pack B 1." The battery pack (second energy storage device) that is installed in the vehicle 100 in place of the battery pack B1 will be referred to as "battery pack B2." Each of the battery packs B 1, B2 has the same configuration as the battery pack 20 shown in FIG. 1. The battery pack B2 installed in the vehicle body 10 functions as the battery pack 20 (FIG. 1) in the vehicle 100.

The battery pack B1 according to the present embodiment is an original energy storage device that is initially installed in the vehicle 100 (e.g., at the time of shipment). The memory device of the ECU 18a stores, in advance, first specification information indicating characteristics of the original energy storage device initially installed in the vehicle 100, and second specification information indicating original performances of the vehicle 100. The first specification information indicates, for example, the maximum output power, maximum regenerative power, capacity, and charging time of the original energy storage device (battery pack B1), which will be described later. As described in detail later, the second specification information indicates the output performance, regenerative charging performance, and maximum cruising range of the vehicle 100 in its original state (e.g., at the time of shipment), and the performances of each in-vehicle device of the vehicle 100 in its original state. For example, the first specification information and the second specification information may be stored in the memory device of the ECU 18a at the time of shipment of the vehicle 100.

The battery swap system 300 according to the present embodiment includes a first storage facility 310, a second storage facility 320, a collection device 330, a loading device 340, a swap device 350, a server 380, and a display device 390. The first storage facility 310 stores a plurality of battery packs to be supplied to vehicles. The first storage facility 310 includes a charger and a supply device as well as a pack housing portion (e.g., a storage unit). The second storage facility 320 stores a plurality of battery packs collected from a plurality of vehicles. The second storage facility 320 includes an inspection device and a sorting device as well as a pack housing portion (e.g., a storage unit). The server 380 includes a processor, a memory device, and a communication device, and functions as a control device. The memory device stores information (e.g., battery information described later) on each battery pack present in the battery swap system 300 in association with identification information of each battery pack. The display device 390 displays information according to an instruction from the server 380.

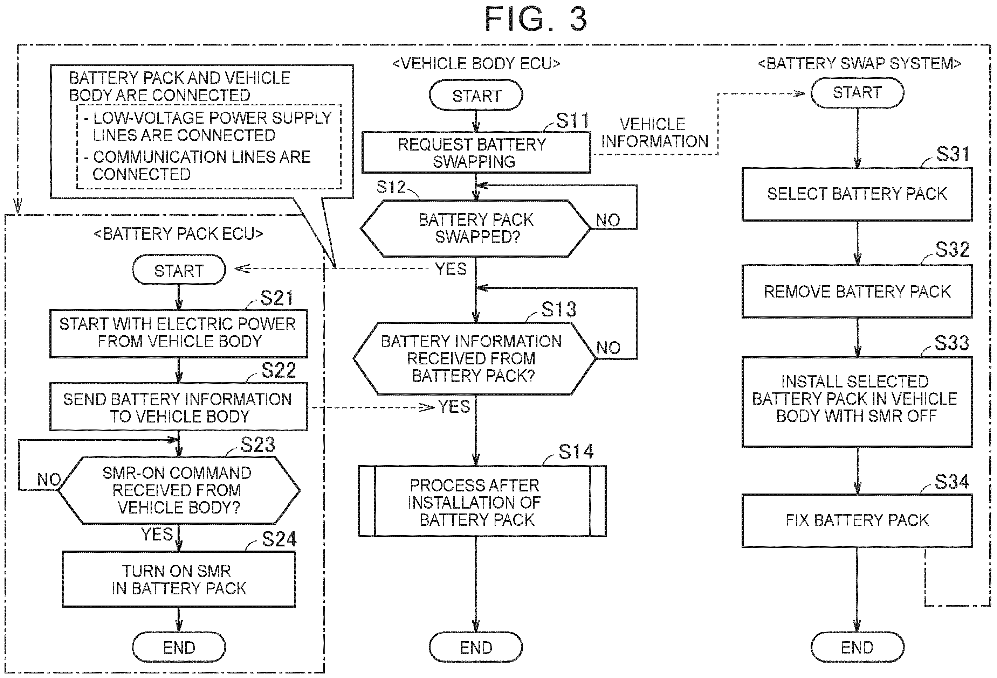

A method for swapping an energy storage device will be described below with reference to FIGS. 1, 2 and 3. FIG. 3 is a flowchart of a process related to the method for swapping an energy storage device according to the present embodiment. For example, the ECU 18a starts a process flow of S11 to S14 shown in FIG. 3 after the vehicle 100 is parked in a predetermined area in a battery swap station. For example, the ECU 18a may start this process flow in response to a request from a user terminal of the vehicle 100. The ECU 18a and the server 380 are configured to wirelessly communicate with each other.

Referring to FIG. 3 together with FIGS. 1 and 2, the ECU 18a sends a signal requesting swapping of the battery pack (hereinafter referred to as "swap request signal") to the server 380 in S11. The swap request signal includes identification information (vehicle ID) of the vehicle 100. The ECU 18a then determines in S12 whether the battery pack has been swapped. The determination in S12 is repeated until swapping of the battery pack is completed (NO in S12).

The server 380 starts a process flow of S31 to S34 in response to the swap request signal. In S31, the server 380 selects a battery pack for the vehicle 100 from the battery packs (stock) held in the first storage facility 310. When it is determined that a battery pack suitable for the vehicle 100 is out of stock, the server 380 may cause the display device 390 to display a message explaining the situation, and terminate the battery swap process. When a battery pack is selected in S31, the server 380 then controls the swap device 350 in S32 so that the battery pack B1 is removed from the vehicle body 10. The vehicle body 10 and the battery pack B1 are thus separated.

Although not shown in the flowchart, a reuse process is performed on the removed battery pack B1. Specifically, the collection device 330 transports (collects) the battery pack B1 from the swap device 350 to the second storage facility 320. The battery packs stored in the second storage facility 320 are inspected in order by the inspection device, and the sorting device sorts the battery packs by purpose based on the inspection results. Each battery pack is reused for its corresponding purpose (for in-vehicle use, for stationary use, etc.). Those battery packs that cannot be reused as they are either disassembled to recycle the materials, or discarded. Those battery packs (for in-vehicle use) that are to be reused in the battery swap system 300 are transported to the first storage facility 310 by the loading device 340. The transported battery packs are loaded into the first storage facility 310.

In S33, the server 380 controls the charger of the first storage facility 310 to charge the battery 21 in the battery pack selected in S31 (battery pack B2). Charging the battery immediately before the battery is supplied to the vehicle reduces degradation of the battery. However, the timing of charging is not limited to this, and can be changed as appropriate. For example, charging of the battery pack may be started when the battery pack is loaded into the first storage facility 310. When the charging is completed, the server 380 controls the supply device of the first storage facility 310 to transport (supply) the battery pack B2 from the first storage facility 310 to the swap device 350. The server 380 then controls the swap device 350 to install the battery pack B2 in the vehicle body 10. At this time, the SMR 23 of the battery pack B2 is open. In S34, the server 380 controls the swap device 350 to fix the battery pack B2 to the vehicle body 10 (e.g., fasten the battery pack B2 to the vehicle body 10 with bolts). After the battery pack B2 is fixed, the server 380 sends a signal notifying completion of the installation of the battery pack (hereinafter referred to as "swap completion signal") to the ECU 18a.

FIG. 2 shows an example in which removal and installation of the battery packs are performed at different positions. The vehicle position may be adjusted before removing the battery pack, before installing the battery pack (after removing the battery pack), or both. A transport device (e.g., a conveyor transport device) or a transport robot, both not shown, may move the vehicle. Removal and installation of the battery packs may be performed at the same position. Swapping of the battery pack (removal and installation) may be performed with the vehicle being in a stationary state. Any transport method may be used in the collection device 330, the supply device, and the loading device 340 as well. The transport method may be a method using a conveyor or a method using a transport robot.

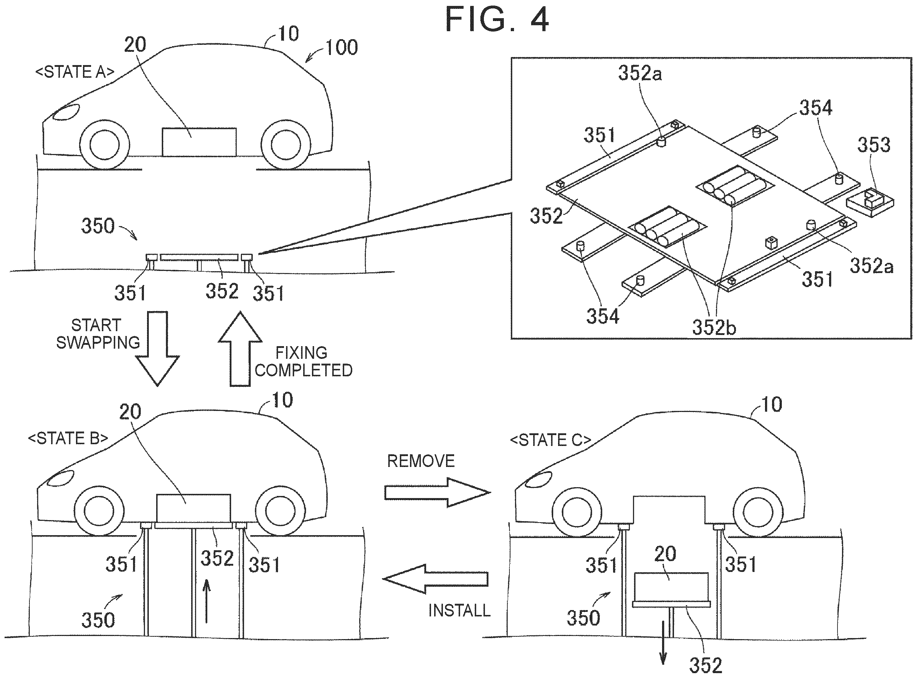

FIG. 4 shows an example of the swap device 350. Referring to FIG. 4, the swap device 350 swaps out the battery pack installed in the vehicle body for another battery pack. Specifically, the swap device 350 includes vehicle body holding portions 351, a battery holding portion 352, a battery adjustment portion 353, and battery fixing portions 354. The battery holding portion 352 includes a plate-shaped member, and positioning pins 352a and transport portions 352b that are provided on the plate-shaped member. Each transport portion 352b includes, for example, rollers that can ascend, descend, and rotate. The battery adjustment portion 353 is configured to adjust the position and angle of the battery pack held on the battery holding portion 352 by changing the position and angle of a positioning member (e.g., an L-shaped block disposed at the corner of the battery pack). The battery fixing portions 354 are connected to the battery holding portion 352. The battery fixing portions 354 are configured to fix the battery pack held on the battery holding portion 352 to the vehicle body and unfix the battery pack from the vehicle body using an electric power tool. Each battery fixing portion 354 may be provided with an electric power tool for tightening and loosening a bolt. Although not shown in the figure, the swap device 350 further includes actuators (e.g., motors) that drive its portions.

For example, the swap device 350 swaps out the battery pack of the vehicle 100 in the following procedure. Before the swap work is started, the swap device 350 is in state A shown in FIG. 4. That is, the vehicle body holding portions 351 and the battery holding portion 352 are located below the vehicle 100. The swap device 350 may detect the position of the vehicle 100 using various sensors and/or cameras. When the swap device 350 receives a command to remove the battery pack (S32 in FIG. 3) from the server 380, the vehicle body holding portions 351 and the battery holding portion 352 ascend toward the vehicle 100 and the swap device 350 goes into state B shown in FIG. 4. Although not shown in the figure, the battery adjustment portion 353 also ascends to the same height as that of the battery holding portion 352 in state B. In state B, the vehicle body 10 is held by the vehicle body holding portions 351. The vehicle body holding portions 351 may lift the vehicle body 10 and hold the vehicle body 10 in a floating state. The battery pack 20 (battery pack B1) is held by the battery holding portion 352. At this time, the positioning pins 352a are inserted into holes provided in the bottom surface of the battery pack 20. As a result, the battery pack 20 and the battery holding portion 352 (and the battery fixing portions 354) have a predetermined positional relationship. The battery fixing portions 354 then unfix the battery pack 20 from the vehicle body 10 (e.g., loosen bolts) The vehicle body 10 and the battery pack 20 thus become separable from each other. After the unfixing, the battery holding portion 352 holding the battery pack 20 descends away from the vehicle body 10, and the swap device 350 goes into state C shown in FIG. 4. The battery pack 20 is thus removed from the vehicle body 10. Although not shown in the figure, the battery adjustment portion 353 also descends to the same height as that of the battery holding portion 352 in state C. Subsequently, the transport portions 352b separate the battery pack 20 held on the battery holding portion 352 from the positioning pins 352a, and transport the battery pack 20 to the collection device 330 (FIG. 2).

The battery pack 20 (battery pack B2) is then supplied from the first storage facility 310 to the battery holding portion 352 based on a battery pack installation command from the server 380 (S33 in FIG. 3). The position and angle of the battery pack 20 are adjusted by the battery adjustment portion 353 so that the positioning pins 352a are inserted into holes provided in the bottom surface of the battery pack 20. The battery holding portion 352 holding the battery pack 20 then ascends toward the vehicle body 10, and the swap device 350 goes into state B again. The battery pack 20 held by the battery holding portion 352 is then installed in the vehicle body 10. When the swap device 350 receives a battery pack fixing command from the server 380 (S34 in FIG. 3), the battery fixing portions 354 fix the battery pack 20 held by the battery holding portion 352 to the vehicle body 10 (e.g., fasten the battery pack 20 to the vehicle body 10 with bolts). After the fixing is completed, the vehicle body holding portions 351 and the battery holding portion 352 descend away from the vehicle body 10, and the swap device 350 goes back to state A. The swap work is thus completed. The configuration of the swap device and the procedure of the swap work are merely illustrative and can be changed as appropriate. The swap work is not necessarily be automated. The user may manually swap the battery pack (energy storage device) without communication between the battery swap system (station) and the vehicle.

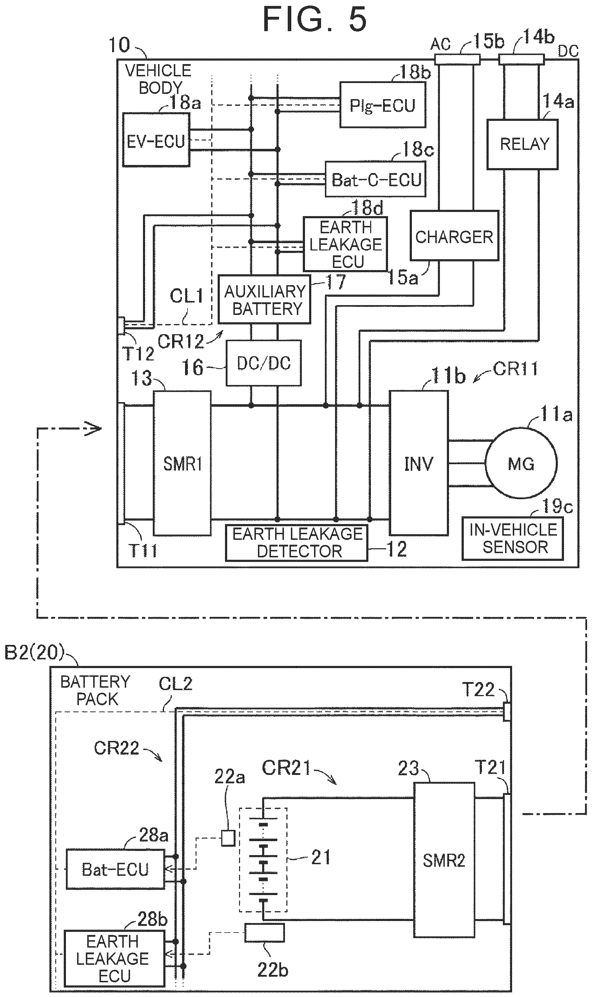

FIG. 5 illustrates how the terminals T11, T12 of the vehicle body 10 and the terminals T21, T22 of the battery pack B2 are connected. Referring to FIG. 5, when the battery pack B2 is installed in the vehicle body 10 by the above procedure, the terminals T21, T22 of the battery pack B2 are connected to the terminals T11, T12 of the vehicle body 10, respectively. The vehicle body 10 and the battery pack B2 are thus connected as shown in FIG. 1. By installing the battery pack B2 in the vehicle body 10, the low-voltage power supply lines (circuits CR12, CR22) and the communication lines (communication lines CL1, CL2) are connected between the vehicle body 10 and the battery pack B2. A process flow of S21 to S24 shown in FIG. 3 is started.

Referring back to FIG. 3, in S21, the ECU 28a in the battery pack B2 is started with electric power supplied from the power supply (auxiliary battery 17) in the vehicle body 10. In S22, the ECU 28a thus started sends battery information on the battery pack B2 to the ECU 18a.

In the present embodiment, the battery information indicates the states of the battery 21 in the battery pack B2 alone (battery pack B2 separated from the vehicle body 10). For example, the battery information indicates the states of the battery 21 detected by the BMS 22a in the battery pack B2. The states of the battery 21 indicated by the battery information include, for example, the voltage, state of charge (SOC), temperature, and earth leakage state of the battery 21. The SOC indicates the remaining charge. For example, the SOC is the ratio of the current remaining capacity to the capacity when fully charged, and varies between 0% and 100%. The voltage of the battery 21 may vary according to the SOC of the battery 21. The battery information further indicates characteristics of the battery 21 in the battery pack B2 alone. The characteristics of the battery 21 indicated by the battery information include, for example, the maximum output power, maximum regenerative power, capacity, and charging time of the battery 21. The maximum output power of the battery 21 indicates a maximum power value (kW) that can be output from the battery 21. The maximum regenerative power of the battery 21 indicates a maximum value (kW) of regenerative power that can be input to the battery 21. The charging time indicates the time required to complete predetermined charging of the battery 21. The predetermined charging is, for example, charging the battery 21 by a direct current (DC) at an ambient temperature of 25°C and 90 kW to increase the SOC of the battery 21 from 10% to 80%. The capacity of the battery 21 is the amount of energy (kWh) stored in the battery 21 when fully charged. For example, the memory device of the ECU 28a in the battery pack B2 stores in advance specification information indicating the characteristics of the battery 21 in the battery pack B2.

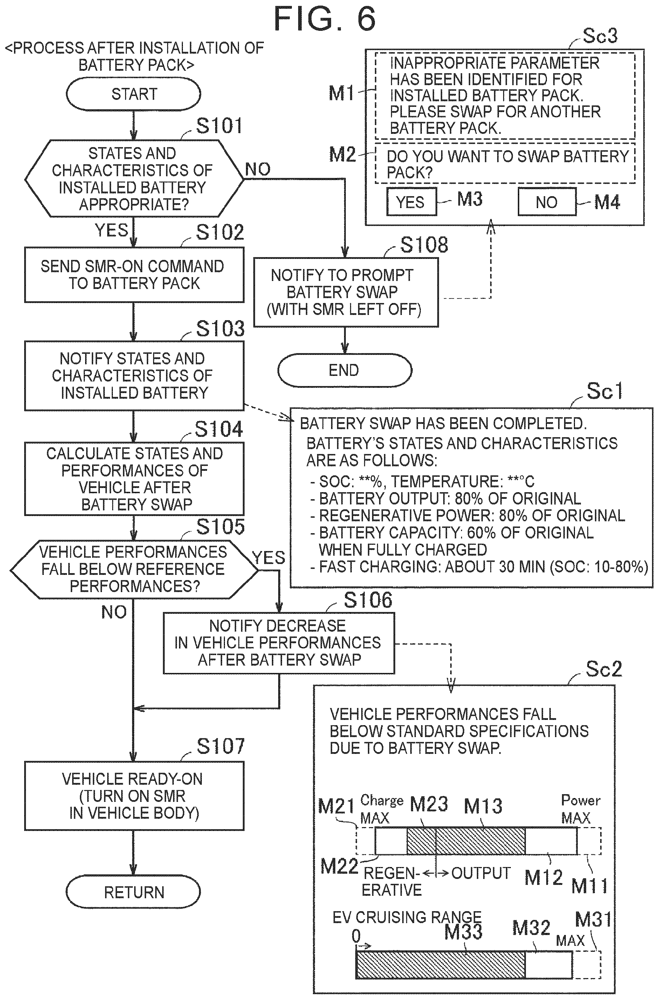

After the ECU 28a sends the battery information, the ECU 28a determines in S23 whether an SMR-ON command (S102 in FIG. 6 described later) has been received from the vehicle body 10. The ECU 28a waits for the SMR-ON command from the vehicle body 10 in S23 with the SMR 23 left open. When the ECU 28a receives the SMR-ON command (YES in S23), the ECU 28a switches the SMR 23 from the open state (disconnected state) to the closed state (connected state) in S24.

When the battery pack B2 is installed in the vehicle body 10, the ECU 18a receives the swap completion signal from the server 380 (S34). Therefore, the determination in S12 is YES, and the process proceeds to S13. In S13, the ECU 18a determines whether the battery information has been received from the ECU 28a. When the ECU 18a receives the battery information (YES in S13), the ECU 18a performs a process flow shown in FIG. 6 in S14.

FIG. 6 is a flowchart showing a process that is performed by the ECU 18a in the vehicle body 10 after the battery pack B2 is installed in the vehicle body 10. Referring to FIG. 6, the ECU 18a determines in S101 whether the states and characteristics of the battery 21 in the battery pack B2 alone are appropriate based on the battery information acquired from the ECU 28a (S22 in FIG. 3). The ECU 18a may determine NO in S101 when any of the battery parameters (such as voltage) indicated by the battery information is not within its predetermined appropriate range. The ECU 18a may determine YES in S101 when all the battery parameters indicated by the battery information are within their appropriate ranges. The appropriate ranges may be set according to the drive system of the vehicle 100 (e.g., the circuit CR11 and the control system).

When it is determined that the states and characteristics of the battery 21 in the battery pack B2 alone are appropriate (YES in S101), the ECU 18a sends a signal instructing to drive the SMR 23 to the closed state (SMR-ON command) to the ECU 28a in S102. As a result, the SMR 23 is closed (S24 in FIG. 3). Regarding the battery pack B2 installed in the vehicle body 10, the ECU 18a then notifies the user of the states and characteristics of the battery 21 in the battery pack B2 alone as indicated by the battery information in S103. Specifically, the ECU 18a notifies the user terminal of the vehicle 100 of the states and characteristics of the battery pack B2. The user terminal may be the display device of the HMI 19a, the mobile terminal 200, or both. When the user terminal receives the notification of S103, the user terminal displays the information notified from the ECU 18a to the user. For example, the user terminal displays a screen Sc1.

The screen Sc1 includes a message indicating that the battery swap has been completed, and the states and characteristics of the battery 21 in the battery pack B2 alone. Specifically, the screen Sc1 displays the states of the battery 21 (e.g., SOC and temperature). Regarding the battery pack B2 installed in the vehicle body 10, the screen Sc1 displays to the user the characteristics (e.g., maximum output power, maximum regenerative power, and capacity) of the battery 21 in the battery pack B2 alone as indicated by the battery information in a manner that allows the user to compare the characteristics of the battery 21 in the battery pack B2 alone installed in the vehicle body 10 with the characteristics of the battery pack B1 (original energy storage device) as indicated by the first specification information stored in the memory device of the ECU 18a. For example, the screen Sc1 displays the ratio of the characteristics of the battery pack B2 (current battery characteristics) to the characteristics of the battery pack B1 (original battery characteristics). This allows the user to know how much the characteristics (performances) of the in-vehicle battery have decreased. For example, if the current battery characteristics are 80% of the original battery characteristics, it means that the battery characteristics have decreased by 20%. The screen Sc1 also displays the charging time of the battery 21 indicated by the battery information. Since the states and characteristics of the replacement in-vehicle battery that are recognized by the vehicle 100 at the time of battery swap are presented to the user as described above, the user is able to distinguish between a decrease in performances due to the battery swap and a decrease in performances due to a failure.

In S104, the ECU 18a then calculates the performances of the vehicle 100 after the installation of the battery pack B2 in the vehicle body 10 by using the battery information acquired from the ECU 28a (S22 in FIG. 3) and the second specification information stored in the memory device of the ECU 18a. The second specification information indicates the original performances of the vehicle 100 (hereinafter also referred to as "standard specifications"). The standard specifications indicated by the second specification information include the output performance (e.g., maximum output power or maximum output torque) of the vehicle 100 based on the power of the battery pack B1, the regenerative charging performance (e.g., maximum regenerative power) of the battery pack B1 in the vehicle 100, and the maximum cruising range of the vehicle 100 based on the power of the battery pack B1. The second specification information further indicates the original performances of the devices installed in the vehicle body 10 (e.g., MG 11a, inverter 11b, DC charging relay 14a, DC inlet 14b, AC charger 15a, and AC inlet 15b). In the present embodiment, the performances of the vehicle 100 calculated in S104 include the output performance of the vehicle 100 based on the power of the battery pack B2, the regenerative charging performance of the battery pack B2 in the vehicle 100, and the maximum cruising range of the vehicle 100 based on the power of the battery pack B2.

The performances of the vehicle 100 after the installation of the battery pack B2 in the vehicle body 10 are determined by the performances of both the vehicle body 10 (particularly, the devices described above) and the battery pack B2. For example, even if the maximum output of the battery 21 in the battery pack B2 is 150 kW, the vehicle 100 can only achieve an output performance of 120 kW if the vehicle drive device (MG 11a and inverter 11b) of the vehicle body 10 can only handle up to 120 kW. Therefore, in S104, the ECU 18a calculates the performances of the vehicle 100 using the battery information on the battery pack B2 and the second specification information on the vehicle body 10. The ECU 18a may calculate the performances of the vehicle 100 by also considering the degree to which each device installed in the vehicle body 10 has degraded from its original state.

In step S105, the ECU 18a then determines whether the performances of the vehicle 100 calculated in S104 fall below predetermined reference performances. In the present embodiment, the reference performances are the standard specifications (original performances) indicated by the second specification information described above. When any of the performances of the vehicle 100 calculated in S104 (output performance, regenerative charging performance, and maximum cruising range) falls below the reference performances (standard specifications), the determination of the ECU 18a in S105 is YES. When all of the performances of the vehicle 100 calculated in S104 are equal to or higher than the reference performances (standard specifications), the determination of the ECU 18a in S105 is NO.

When it is determined that any of the performances of the vehicle 100 calculated in S104 falls below the reference performances (YES in S105), the ECU 18a notifies the user of the states and performances of the vehicle 100 after the installation of the battery pack B2 in the vehicle body 10 in S106. Specifically, the ECU 18a notifies the user terminal of the vehicle 100 of the states and characteristics of the vehicle 100. The ECU 18a may acquire the states of the vehicle 100 using either or both of the battery information described above and the detection results from the in-vehicle sensor 19c. The user terminal may be the display device of the HMI 19a, the mobile terminal 200, or both. When the user terminal receives the notification of S106, the user terminal displays the information notified from the ECU 18a to the user. For example, the user terminal displays a screen Sc2.

The screen Sc2 displays to the user the performances of the vehicle 100 after the installation of the battery pack B2 in the vehicle body 10 in a manner that allows comparison with the original performances (standard specifications) indicated by the second specification information. More specifically, the screen Sc2 displays both the data on the performances of the vehicle 100 after the installation of the battery pack B2 in the vehicle body 10 and the data on the original performances (standard specifications) with their origins (zero points) aligned so as to allow comparison between these two pieces of data. The screen Sc2 includes: a message indicating that the performances of the vehicle 100 have decreased due to the battery swap; images M11, M21, and M31 (standard specification lines) shown by dashed lines; images M12, M22, and M32 (potential bars) shown by continuous lines; and images M13, M23, and M33 (status bars) shown hatched. The images M11, M21, and M31 show the maximum output torque, maximum regenerative charging power, and maximum cruising range in the standard specifications of the vehicle 100, respectively. The images M12, M22, and M32 show the performances (maximum output torque, maximum regenerative charging power, and maximum cruising range in an optimal state, respectively) of the vehicle 100 after the installation of the battery pack B2 in the vehicle body 10. The images M13, M23, and M33 show the performances (maximum output torque, maximum regenerative charging power, and maximum cruising range, respectively) that the vehicle 100 can achieve in a current state.

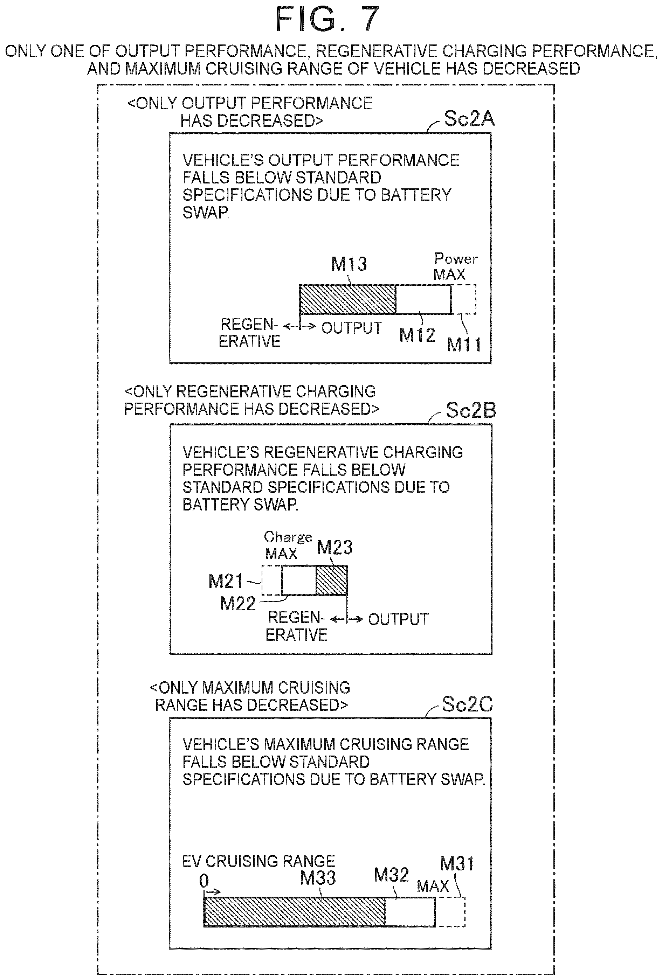

In the present embodiment, the ECU 18a causes the user terminal to display only those performances that fall below the standard specifications out of the performances (output performance, regenerative charging performance, and maximum cruising range) of the vehicle 100 after the installation of the battery pack B2 in the vehicle body 10. When all of the output performance, the regenerative charging performance, and the maximum cruising range fall below the standard specifications, the ECU 18a causes the user terminal to display, for example, the screen Sc2 shown in FIG. 6. When only one of the output performance, the regenerative charging performance, and the maximum cruising range falls below the standard specifications, the ECU 18a causes the user terminal to display, for example, one of screens Sc2A, Sc2B, and Sc2C shown in FIG. 7. FIG. 7 shows a modification of the screen Sc2 shown in FIG. 6. Referring to FIG. 7, the screen Sc2A displays the decreased output performance of the vehicle 100 together with a message indicating that the output performance has decreased due to the battery swap. The screen Sc2B displays the decreased regenerative charging performance of the vehicle 100 together with a message indicating that the regenerative charging performance has decreased due to the battery swap. The screen Sc2C displays a decreased maximum cruising range of the vehicle 100 together with a message indicating that the maximum cruising range has decreased due to the battery swap.

Referring back to FIG. 6, when S106 is performed, the process proceeds to S107. When it is determined that the performances of the vehicle 100 calculated in S104 do not fall below the reference performances (NO in S105), the process proceeds to S107 without performing S106. In this case, the ECU 18a does not notify the user of the performances of the vehicle 100 after the installation of the battery pack B2 in the vehicle body 10.

In S107, the ECU 18a switches the SMR 13 from the open state (disconnected state) to the closed state (connected state). The vehicle 100 is thus brought into the Ready-ON state, and the voltage of the battery 21 in the battery pack B2 is applied to the circuit CR11. S14 in FIG. 3 and therefore the process flow related to battery swap thus end.

When it is determined that any of the states and characteristics of the battery 21 in the battery pack B2 alone is not appropriate (NO in S101), the ECU 18a sends a predetermined notification to the user terminal of the vehicle 100 (e.g., the HMI 19a and/or the mobile terminal 200) in S108. The processing flow shown in FIG. 6 thus ends.

When the user terminal receives the notification of S108, the user terminal displays, for example, a screen Sc3. The screen Sc3 shows messages M1, M2 and operation portions M3, M4. The message M1 prompts the user of the vehicle 100 to swap the battery pack. The message M2 provides an explanation about the operation portions M3, M4. When the operation portion M3 is operated, the user terminal requests the ECU 18a to swap the battery pack, and then ends the display of the screen Sc3. In response to the request from the user terminal, the ECU 18a starts over the process flow of S11 to S14 shown in FIG. 3. The battery pack B2 installed in the vehicle 100 is swapped out for another battery pack. When the operation portion M4 is operated, the user terminal ends the display of the screen Sc3 without requesting swapping of the battery pack.

As described above, the method for swapping an energy storage device according to the present embodiment includes the processes shown in FIGS. 3 and 6. In S32 of FIG. 3, the battery pack B1 is removed from the vehicle 100 including: the vehicle body 10 including the ECU 18a (first control device); and the battery pack B1. In S33 of FIG. 3, the battery pack B2 including the ECU 28a (second control device) is installed in the vehicle body 10 in place of the battery pack B1. With the battery pack B2 installed in the vehicle body 10, the ECU 18a waits to receive battery information on the battery pack B2 (S13 in FIG. 3), and acquires the battery information from the ECU 28a through S22 in FIG. 3. In S103 of FIG. 6, the ECU 18a notifies the user of the states of the battery pack B2 installed in the vehicle body 10 and the characteristics of the battery pack B2 installed in the vehicle body 10 by using the battery information acquired from the battery pack B2. In S106 of FIG. 6, the ECU 18a notifies the user of the states of the vehicle 100 after the installation of the battery pack B2 in the vehicle body 10 and the performances of the vehicle 100 after the installation of the battery pack B2 in the vehicle body 10. This allows the user to distinguish between a decrease in performances due to battery swap and a decrease in performances due to a failure. This method can reduce the possibility that the user may feel something is wrong or get confused about the states or performances of the vehicle 100 (or the battery pack B2 installed in the vehicle 100) after the battery pack B2 is installed in the vehicle body 10.

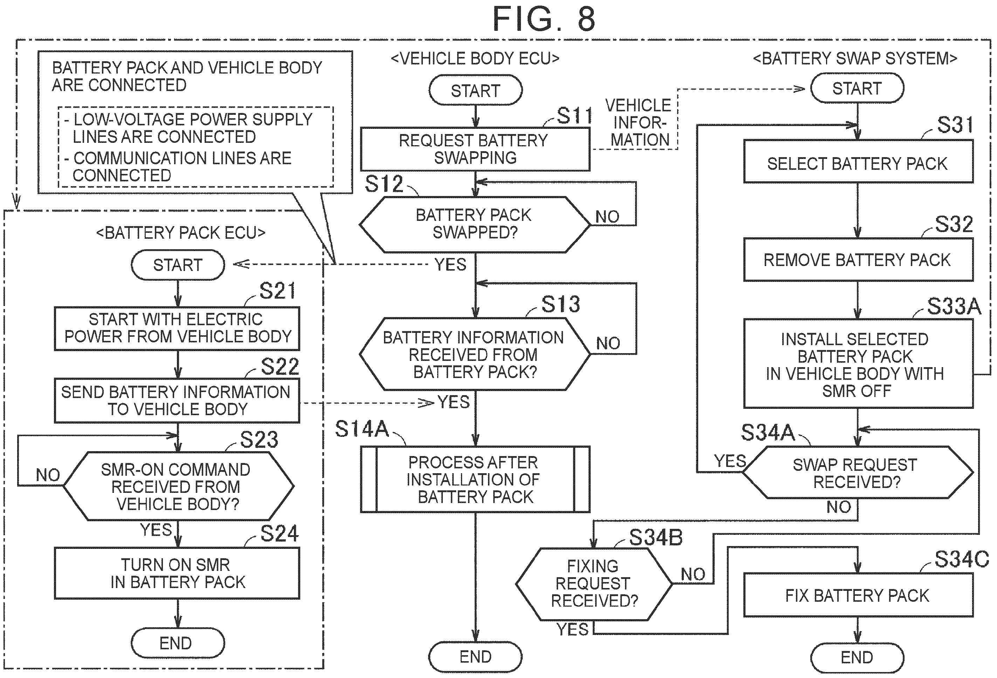

In the above embodiment, the ECU 18a gives a notification regarding the battery swap to the user (S103, S106 in FIG. 6) after the battery swap system 300 has fixed the battery pack B2 to the vehicle body 10. However, the ECU 18a need not necessarily give this notification to the user after the battery pack B2 is fixed, or may give this notification to the user before the battery pack B2 is fixed. The ECU 18a may perform a process flow shown in FIG. 8 instead of the process flow shown in FIG. 3. FIG. 8 is a flowchart of a modification of the method shown in FIG. 3. The method shown in FIG. 8 is the same as the method shown in FIG. 3, except that S14A is used instead of S14 (FIG. 3), and S33A, S34A to S34C are used instead of S33, S34 (FIG. 3).

Referring to FIG. 8, in this modification, the server 380 sends in S33A a swap completion signal to the ECU 18a after the battery pack B2 is installed in the vehicle body 10 and before the battery pack B2 is fixed to the vehicle body 10. When the ECU 18a receives a swap completion signal, the determination in S12 is YES. After the server 380 sends the swap completion signal, the server 380 determines in S34A and S34B whether a swap request and a fixing request have been received from the vehicle body 10, respectively. The determinations in S34A and S34B are repeated as long as the server 380 receives neither of the requests (NO in both S34A and S34B).

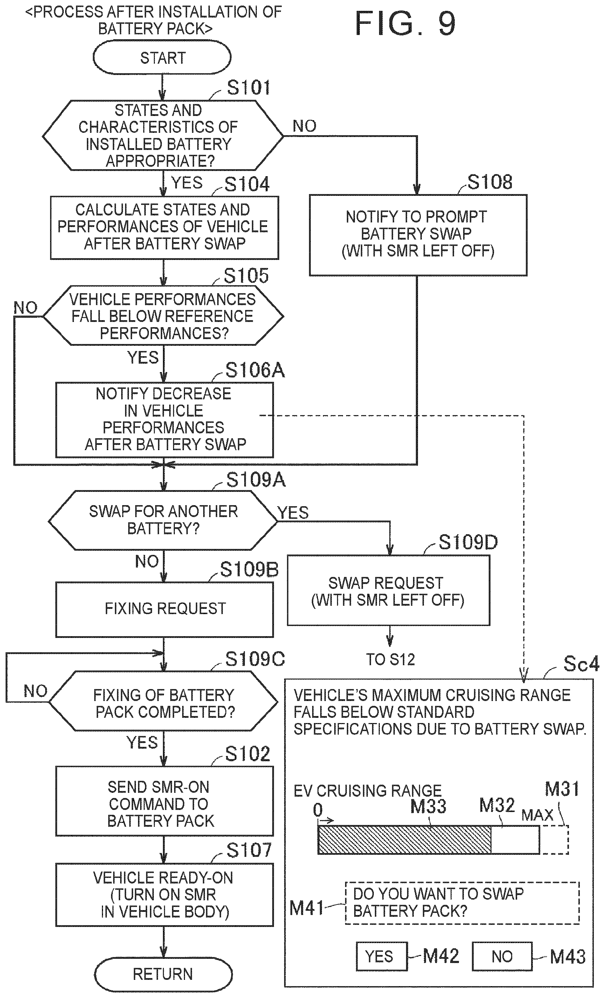

When the server 380 receives a swap request (S109D in FIG. 9 described later) (YES in S34A), the process returns to S31. The server 380 selects another battery pack in S31, removes the battery pack B2 from the vehicle body 10 in S32, and installs the battery pack selected in S31 in the vehicle body 10 in S33A. When the server 380 receives a fixing request (S109B in FIG. 9 described later) (YES in S34B), the process proceeds to S34C. In S34C, the battery pack (e.g., the battery pack B2) installed in the vehicle body 10 in S33A is fixed to the vehicle body 10. After the battery pack is fixed, the server 380 sends a signal notifying completion of the fixing of the battery pack (hereinafter referred to as "swap fixing signal") to the ECU 18a.

In S14A, the ECU 18a performs a process flow shown in FIG. 9 instead of the process flow shown in FIG. 6. FIG. 9 is a flowchart of a first modification of the method shown in FIG. 6.

Referring to FIG. 9, in S101, the ECU 18a performs the same determination process as that of S101 of FIG. 6. When NO in S101, the ECU 18a causes the user terminal to display the screen Sc3 (FIG. 6) in S108. The process then proceeds to S109A. When YES in S101, the ECU 18a performs S104 and S105 that are the same as those in the process flow of FIG. 6. When it is determined that any of the performances of the vehicle 100 calculated in S104 falls below the reference performances (YES in S105), the ECU 18a causes the user terminal to display a screen Sc4 in S106A. The process then proceeds to S109A. The screen Sc4 displays each performance of the vehicle 100 that falls below the standard specifications due to the battery swap (e.g., the maximum cruising range), a message M41, and operation portions M42, M43. The message M41 provides an explanation about the operation portions M42, M43.

In S109A, the ECU 18a determines whether a battery swap request has been received from the user. Specifically, the ECU 18a determines whether either the operation portion M3 (FIG. 6) on the screen Sc3 or the operation portion M42 on the screen Sc4 has been operated. When either the operation portion M3 or M42 has been operated (YES in S109A), the ECU 18a sends a swap request signal to the server 380 in S109D, and the process then proceeds to S12 in FIG. 8.

When the operation portion M4 (FIG. 6) on the screen Sc3 or the operation portion M43 on the screen Sc4 has been operated, the determination in S109A is NO. When YES in S101 and NO in S105, the determination in S109A is also NO. When NO in S109A, the process proceeds to S109B. In S109B, the ECU 18a sends a signal requesting fixing of the battery pack B2 (fixing request) to the server 380. The ECU 18a then determines in S109C whether the fixing of the battery pack B2 is completed based on whether a swap fixing signal has been received from the server 380. When the battery pack B2 is fixed to the vehicle body 10 in S34C in FIG. 8 and the swap fixing signal is sent from the server 380 to the ECU 18a, the determination in S109C is YES, and the process proceeds to S102. The voltage of the battery 21 is then applied to the circuit CR11 in S102 and S107.

In the above method shown in FIGS. 8 and 9, the ECU 18a notifies the user of the performances of the vehicle 100 after the installation of the energy storage device to the vehicle body 10 (S106A), before the battery swap system 300 fixes the energy storage device (battery pack) to the vehicle body 10. The user who has received the notification can decide whether to swap out the energy storage device. In this configuration, the energy storage device has not been fixed when removal of the energy storage device is requested in S109D. This can save time and labor in unfixing the energy storage device when removing the energy storage device.

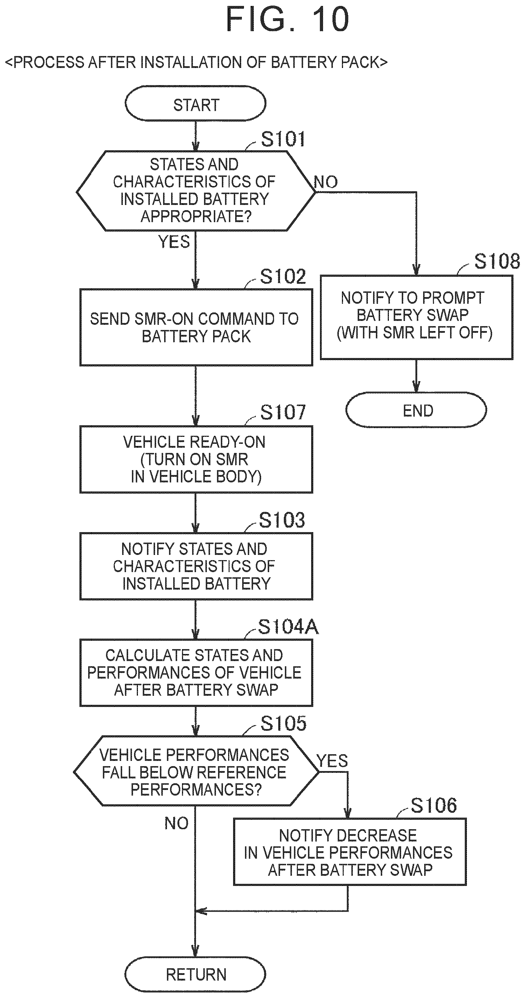

In the above embodiment, before the vehicle 100 is brought into the Ready-ON state, the performances of the vehicle 100 after installation of the energy storage device (battery pack) in the vehicle body 10 are calculated (S104 in FIG. 6), and the user is notified of each performance of the vehicle 100 that falls below the standard specifications due to swapping of the energy storage device (S 106 in FIG. 6). It is therefore possible to notify the user of a decrease in performances of the vehicle 100 after the energy storage device is installed in the vehicle body 10 and before the vehicle 100 starts traveling. However, the ECU 18a need not necessarily perform this process flow, and may perform a process flow shown in FIG. 10 instead of the process flow shown in FIG. 6. FIG. 10 is a flowchart of a second modification of the method shown in FIG. 6. In the process flow shown in FIG. 10, the timing of S107 is changed to between S102 and S103. Moreover, S104A is performed instead of S104 (FIG. 6).

Referring to FIG. 10, the same determination process as that of S101 in the process flow of FIG. 6 is performed in S101. When YES in S101, S102, S107, and S103 are performed in this order, and the process then proceeds to S104A. In S104A, the ECU 18a calculates the performances of the vehicle 100 after the installation of the battery pack B2 in the vehicle body 10 by using the battery information acquired from the ECU 28a (S22 in FIG. 3), the second specification information stored in the memory device of the ECU 18a, and the detection results obtained from the in-vehicle sensor 19c in the vehicle 100 in the Ready-On state. Since the ECU 18a calculates the performances of the vehicle 100 using the sensor detection values of the vehicle 100 in the Ready-ON state, it becomes easier to obtain more accurate performances of the vehicle 100. In step S105, the ECU 18a then determines whether to give the notification of S106 based on the performances of the vehicle 100 calculated in S104A.

In the above embodiment, the ECU 18a causes the user terminal to display only those performances that fall below the standard specifications out of the performances (output performance, regenerative charging performance, and maximum cruising range) of the vehicle 100 after the installation of the battery pack B2 in the vehicle body 10 (see, for example, FIG. 7). However, the ECU 18a need not necessarily cause the user terminal to display only those performances that fall below the standard specifications. The ECU 18a may cause the user terminal to display the performances of the vehicle 100 after the installation of the battery pack B2 in the vehicle body 10 regardless of whether they fall below the standard specifications.

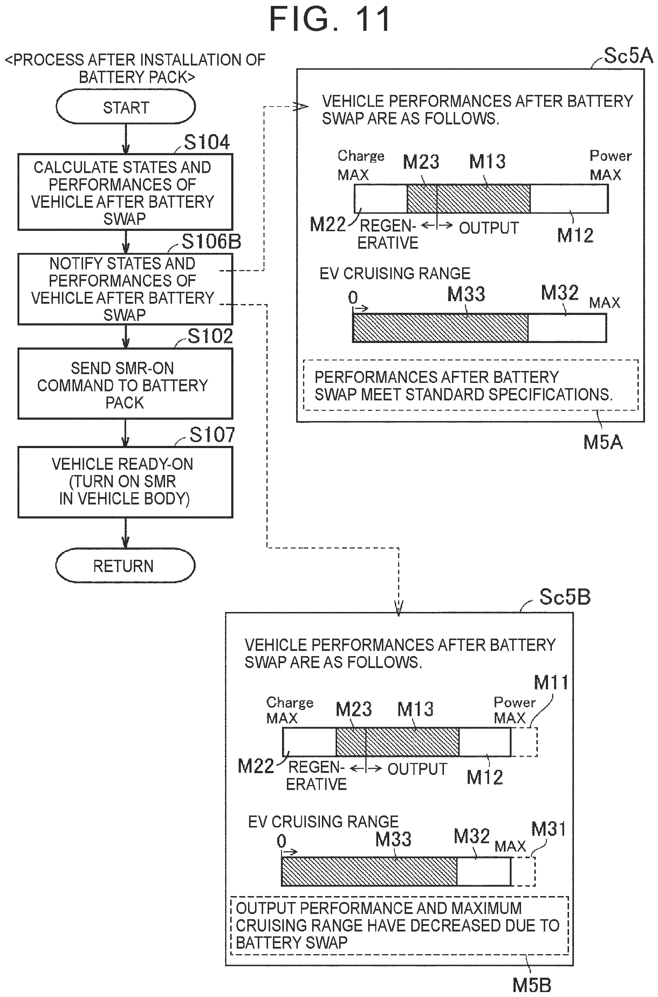

The ECU 18a may perform a process flow shown in FIG. 11 instead of the process flow shown in FIG. 6. FIG. 11 is a flowchart of a third modification of the method shown in FIG. 6.

Referring to FIG. 11, in this modification, the ECU 18a calculates the performances of the vehicle 100 after the installation of the battery pack B2 in the vehicle body 10 in S104 that is the same as in the process flow of FIG. 6. In S106B, the ECU 18a then notifies the user of the calculated performances of the vehicle 100.

When all of the performances (e.g., output performance, regenerative charging performance, and maximum cruising range) of the vehicle 100 after the installation of the battery pack B2 in the vehicle body 10 meet the standard specifications, the ECU 18a causes the user terminal to display, for example, a screen Sc5A in S106B. When any of the performances (e.g., output performance, regenerative charging performance, and maximum cruising range) of the vehicle 100 after the installation of the battery pack B2 in the vehicle body 10 falls below the standard specifications, the ECU 18a causes the user terminal to display, for example, a screen Sc5B in S106B. Both of the screens Sc5A, Sc5B display the performances (e.g., output performance, regenerative charging performance, and maximum cruising range) of the vehicle 100 after the installation of the battery pack B2 in the vehicle body 10. The screen Sc5A further displays a message M5A indicating that the performances after the battery swap meet the standard specifications. The screen Sc5B further displays a message M5B indicating that at least one of the performances falls below the standard specifications due to the battery swap. After the notification in S106B, the vehicle 100 is brought into the Ready-ON state through S102 and S107 that are the same as those in the process flow of FIG. 6. The processing flow shown in FIG. 11 thus ends.

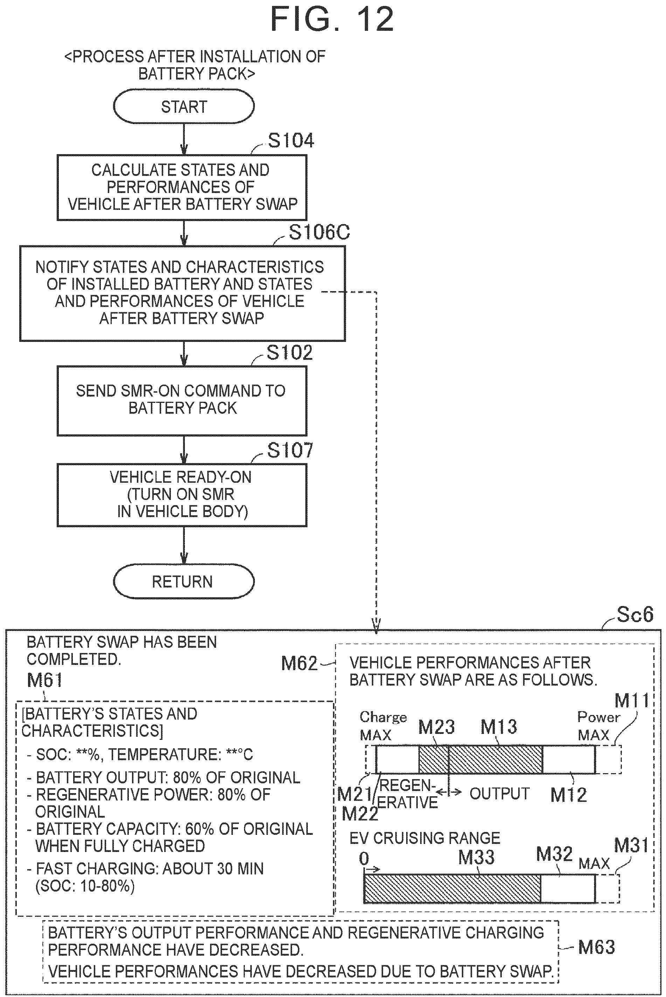

The ECU 18a may perform a process flow shown in FIG. 12 instead of the process flow shown in FIG. 6. FIG. 12 is a flowchart of a fourth modification of the method shown in FIG. 6. The process flow shown in FIG. 12 is the same as the process flow shown in FIG. 11 except that S106C is used instead of S106B (FIG. 11). Referring to FIG. 12, in S106C, the ECU 18a notifies the user of the states and characteristics of the battery pack B2 installed in the vehicle body 10 and the states and characteristics of the vehicle 100 after the installation of the battery pack B2 in the vehicle body 10, both at the same time, by using the battery information acquired from the battery pack B2 (S22 in FIG. 3) and the performances of the vehicle 100 calculated in S104. For example, the ECU 18a causes the user terminal to display a screen Sc6. The screen Sc6 includes: a display portion M61 showing the states and characteristics of the battery pack B2; a display portion M62 showing the states and performances of the vehicle 100 after the installation of the battery pack B2 in the vehicle body 10; and a message M63 indicating whether either or both of the battery performances and the vehicle performances have become lower than in the original state due to the battery swap.

A display form of a display system including the user terminal (e.g., the HMI 19a and/or the mobile terminal 200) is not particularly limited. For example, the states and performances may be represented by numerical values, or may be represented by images (e.g., diagrams, graphs, charts, or icons). A plurality of categories related to the states or performances may be identified by letters (such as A, B, and C), symbols, or colors. The user terminal may display a video of how the behavior of the vehicle 100 changes with a change in performances. The user terminal may display a video showing the vehicle behavior before the performances decrease (e.g., the original vehicle behavior) and a video showing the vehicle behavior after any of the performances decreases (e.g., the current vehicle behavior) in a manner that allows comparison therebetween.

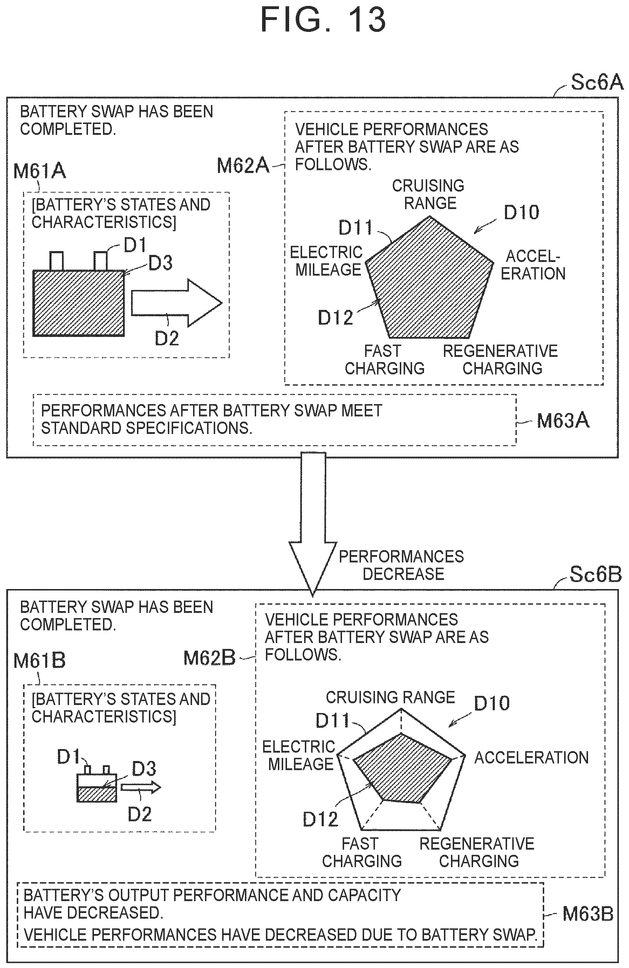

For example, in S106C of FIG. 12, the ECU 18a may cause the user terminal to display a screen Sc6A or Sc6B shown in FIG. 13. FIG. 13 shows a modification of the display form. Each of the screens Sc6A, Sc6B includes: a display portion M61A, M61B showing the states and characteristics of the battery pack B2; a display portion M62A, M62B showing the performances of the vehicle 100 after the installation of the battery pack B2 in the vehicle body 10; and a message M63A, M63B indicating whether either or both of the battery performances and the vehicle performances have become lower than in the original state due to the battery swap. In each of the display portions M61A, M61B, the size of an icon D1 changes according to the capacity of the battery pack B2, and the thickness of an arrow D2 changes according to the maximum output power of the battery pack B2. The size of an image D3 (hatched area) in the icon D1 changes according to the SOC of the battery pack B2. In each of the display portions M62A, M62B, a radar chart D10 shows performances D12 of the vehicle 100 (acceleration performance, electric mileage performance, regenerative charging performance, fast charging performance, and maximum cruising range) in comparison with standard specifications D11. The performances D12 of the vehicle 100 are calculated in S104 of FIG. 12. The battery information (S22 in FIG. 3) may further include the weight of the battery pack B2. The message M63A indicates that both the battery performances and the vehicle performances after the batter swap are equal to those in the original state. The message M63B indicates that battery performances and the vehicle performances fall below those in the original state due to the battery swap.

The configuration of the vehicle body shown in FIG. 1 may be changed as appropriate. For example, in the configuration shown in FIG. 1, either or both of the SMRs 13, 23 may be omitted. Either or both of the DC inlet 14b and the AC inlet 15b may be omitted, or the DC inlet 14b and the AC inlet 15b may be changed to a single common inlet for AC and DC. The vehicle body may be contactlessly chargeable. The vehicle body may be equipped with a solar panel.

The configuration of the battery pack shown in FIG. 1 may be changed as appropriate. For example, the circuit CR22 in the battery pack may further include a temperature adjustment device that is driven with electric power from the auxiliary battery 17. The temperature adjustment device may include either or both of a heating device that heats the battery 21 and a cooling device that cools the battery 21. The energy storage device (battery pack 20) according to the above embodiment does not include a power supply for starting the second control device (ECU 28a). However, the energy storage device is not limited to this, and may include the power supply for the second control device. The energy storage device is not limited to the battery pack, and may have a packless structure.

The above various modifications may be combined as desired. The vehicle is not limited to a passenger car, and may also be a bus, a truck, or a work vehicle (e.g., a tractor or a forklift). The vehicle may be configured to travel unmanned by autonomous driving or remote driving.

The embodiment disclosed herein should be construed as illustrative in all respects and not restrictive. The scope of the present invention is shown by the claims rather than by the above description of the embodiment, and is intended to include all modifications within the meaning and scope equivalent to those of the claims.

## Claims

1. A vehicle (100) comprising a vehicle body (10) in and from which a first energy storage device (B2) is installable and removable, and that includes a first control device (28a), wherein the first control device (28a) is configured to, when the first energy storage device (B2) is installed in the vehicle body (10), notify a user of at least one of the following: a state of the first energy storage device (B2) installed in the vehicle body (10); a characteristic of the first energy storage device (B2) installed in the vehicle body (10); a state of the vehicle (100) after installation of the first energy storage device (B2) in the vehicle body (10); and a performance of the vehicle (100) after the installation of the first energy storage device (B2) in the vehicle body (10).

2. The vehicle (100) according to claim 1, wherein:
the first control device (28a) includes a memory device that stores first specification information indicating a characteristic of an original second energy storage device (B1) initially installed in the vehicle (100); and
the first control device (28a) is configured to, when the first energy storage device (B2) is installed in the vehicle body (10), notify the user of the characteristic of the first energy storage device (B2) installed in the vehicle body (10) in a manner that allows comparison with the characteristic of the original second energy storage device (B1) that is indicated by the first specification information.

3. The vehicle (100) according to claim 2, wherein the characteristic of the first energy storage device (B2) that is notified includes at least one of the following of the first energy storage device (B2): maximum output power; maximum regenerative power; and a capacity, and the characteristic of the second energy storage device (B1) that is notified includes at least one of the following of the second energy storage device (B1): maximum output power; maximum regenerative power; and a capacity.

4. The vehicle (100) according to claim 1, wherein:
the first control device (28a) includes a memory device that stores second specification information indicating an original performance of the vehicle (100); and
the first control device (28a) is configured to, when the first energy storage device (B2) is installed in the vehicle body (10), notify the user of the performance of the vehicle (100) after the installation of the first energy storage device (B2) in the vehicle body (10) in a manner that allows comparison with the original performance indicated by the second specification information.

5. The vehicle (100) according to claim 4, wherein the performance of the vehicle (100) that is notified includes at least one of the following: an output performance of the vehicle (100) based on electric power of the first energy storage device (B2); a regenerative charging performance of the first energy storage device (B2) in the vehicle (100); and a maximum cruising range of the vehicle (100) based on the electric power of the first energy storage device (B2).

6. The vehicle (100) according to claim 1, wherein:
the first control device (28a) includes a memory device that stores second specification information indicating an original performance of the vehicle (100);
when the first energy storage device (B2) is installed in the vehicle body (10), the first control device (28a) determines whether the performance of the vehicle (100) after the installation of the first energy storage device (B2) in the vehicle body (10) falls below the original performance indicated by the second specification information;
when determination is made that the performance of the vehicle (100) falls below the original performance, the first control device (28a) notifies the user of the performance of the vehicle (100) after the installation of the first energy storage device (B2) in the vehicle body (10); and
when determination is made that the performance of the vehicle (100) does not fall below the original performance, the first control device (28a) does not notify the user of the performance of the vehicle (100) after the installation of the first energy storage device (B2) in the vehicle body (10).

7. The vehicle (100) according to claim 1, wherein:
the first energy storage device (B2) is a battery pack (20) including a second control device (18a);
the vehicle body (10) further includes a power supply (17); and
the second control device (18a) is configured to, when the first energy storage device (B2) is installed in the vehicle body (10), be started with electric power supplied from the power supply (17), and is configured to, when the second control device (18a) is started, send information on the first energy storage device (B2) installed in the vehicle body (10) to the first control device (28a).

8. The vehicle (100) according to claim 7, wherein:
the information that is sent includes the characteristic of the first energy storage device (B2) installed in the vehicle body (10); and
the first control device (28a) is configured to calculate the performance of the vehicle (100) after the installation of the first energy storage device (B2) in the vehicle body (10) by using the information received from the second control device (18a).

9. The vehicle (100) according to any one of claims 1 to 8, the vehicle (100) further comprising a display device (390), wherein the first control device (28a) is configured to, when the first energy storage device (B2) is installed in the vehicle body (10), notify the display device (390) of at least one of the following: the state of the first energy storage device (B2) installed in the vehicle body (10); the characteristic of the first energy storage device (B2) installed in the vehicle body (10); the state of the vehicle (100) after the installation of the first energy storage device (B2) in the vehicle body (10); and the performance of the vehicle (100) after the installation of the first energy storage device (B2) in the vehicle body (10), and the display device (390) displays, to the user, information notified from the first control device (28a).

10. A display system comprising:
the vehicle (100) according to any one of claims 1 to 8; and
a mobile terminal (200) that is carriable by the user, wherein
the first control device (28a) is configured to, when the first energy storage device (B2) is installed in the vehicle body (10), notify the mobile terminal (200) of at least one of the following: the state of the first energy storage device (B2) installed in the vehicle body (10); the characteristic of the first energy storage device (B2) installed in the vehicle body (10); the state of the vehicle (100) after the installation of the first energy storage device (B2) in the vehicle body (10); and the performance of the vehicle (100) after the installation of the first energy storage device (B2) in the vehicle body (10), and the mobile terminal (200) displays, to the user, information notified from the first control device (28a).

11. A method for swapping an energy storage device, the method comprising:
removing a second energy storage device (B1) from a vehicle (100) including a vehicle body (10) and the second energy storage device (B1), the vehicle body (10) including a first control device (18a);
installing a first energy storage device (B2) including a second control device (28a) in the vehicle body (10) in place of the second energy storage device (B1);
acquiring, by the first control device (18a), information on the first energy storage device (B2) from the second control device (28a) with the first energy storage device (B2) installed in the vehicle body (10); and
notifying, by the first control device (18a), a user of at least one of the following by using the information acquired from the second control device (28a): a state of the first energy storage device (B2) installed in the vehicle body (10); a characteristic of the first energy storage device (B2) installed in the vehicle body (10); a state of the vehicle (100) after installation of the first energy storage device (B2) in the vehicle body (10); and a performance of the vehicle (100) after the installation of the first energy storage device (B2) in the vehicle body (10).

12. The method according to claim 11, wherein the notifying the user includes calculating, by the first control device (18a), the performance of the vehicle (100) after the installation of the first energy storage device (B2) in the vehicle body (10) by using the information acquired from the second control device (28a), and
notifying the user of the calculated performance of the vehicle (100) by the first control device (18a).
